# EUROPEAN PATENT SPECIFICATION

(11) **EP 4 383 038 B1**
(45) Date of publication and mention of the grant of the patent: **25.03.2026**
(21) Application number: 23745368.3
(22) Date of filing: 10.03.2023
(51) Int. Cl.: G05D 23/19, H01M 10/613, H01M 10/625, H01M 10/637, H01M 50/581, H01M 50/583

(54) **TEMPERATURE CONTROL METHOD FOR BATTERY ENERGY DISTRIBUTION UNIT**
TEMPERATURSTEUERUNGSVERFAHREN FÜR BATTERIEENERGIEVERTEILUNGSEINHEIT
PROCÉDÉ DE CONTRÔLE DE TEMPÉRATURE POUR UNITÉ DE DISTRIBUTION D'ÉNERGIE DE BATTERIE

(30) Priority: 24.10.2022 CN 202211299662
(43) Date of publication of application: 12.06.2024
(73) Proprietor: Eve Energy Co., Ltd., Huizhou, Guangdong 516006 (CN)
(72) Inventor: LIAO, Hulong, Guangdong 516006 (CN)
(74) Representative: Cabinet Beaumont
(86) International application number: PCT/CN2023/080857
(87) International publication number: WO 2024/087459

(56) References cited:
- EP-A2- 2 680 682
- CN-A- 108 448 200
- CN-A- 108 879 026
- CN-A- 111 267 619
- CN-A- 112 736 320
- CN-A- 112 952 234
- CN-A- 112 952 234
- CN-A- 113 163 684
- CN-A- 113 284 683
- CN-A- 115 373 440
- CN-U- 211 265 674
- CN-U- 216 145 746
- JP-A- 2011 066 002
- US-A1- 2012 263 984
- US-A1- 2020 313 260
- US-A1- 2022 077 549

## Description

### TECHNICAL FIELD

Embodiments of the present application relate to the field of automobile safety management technology, for example, a temperature control method for a battery energy distribution unit.

### BACKGROUND

A battery energy distribution unit has a problem that it is difficult to dissipate heat. In this regard, to control the temperature of the battery energy distribution unit, generally, an electrical component (such as a fuse and a relay) having a large current carrying capacity and a higher specification and type is selected and configured to improve the heat resistance of the battery energy distribution unit. However, the battery energy distribution unit is larger in volume, larger in space, heavier in weight, and higher in costs.

Further relevant technologies are also known from US2020/313260A1, which relates to a cooling system for a rechargeable energy system.

Further relevant technologies are also known from CN112952234A, which relates to a method for controlling the temperature of a battery distribution unit, the battery distribution unit and a vehicle. The method for controlling the temperature of the battery distribution unit uses the battery distribution unit.

Further relevant technologies are also known from CN108879026A, which relates to a heat dissipation system, a battery cut-off unit and a battery system.

Further relevant technologies are also known from CN216145746U, which relates to a battery pack circuit breaking unit device and a battery pack.

Further relevant technologies are also known from US2022/077549A1, which relates to a battery system.

### SUMMARY

An embodiment of the present application provides a temperature control method for a battery energy distribution unit to control the temperature of the battery energy distribution unit, so that the battery energy distribution unit does not need to select an electrical component having a large current carrying capacity and a higher specification and type.

The features of the temperature control method for a battery energy distribution unit, and the battery management system according to the present invention are defined in the independent claims. Further improvements are provided in the dependent claims.

In a first aspect, an embodiment of the present application provides a temperature control method for a battery energy distribution unit. The method is applied to a battery management system in a battery pack. The battery energy distribution unit is provided with a battery energy distribution unit liquid cooling system. The battery energy distribution unit liquid cooling system is connected in series with a battery pack liquid cooling system.

The temperature control method for a battery energy distribution unit includes the steps below.

Target data of the battery energy distribution unit is detected. The target data includes at least one of a first temperature or a distribution current.

A control command is generated according to the target data and sent to the battery energy distribution unit liquid cooling system or the battery pack liquid cooling system so that the battery energy distribution unit liquid cooling system or the battery pack liquid cooling system starts to operate according to the control command, thereby controlling the temperature of the battery energy distribution unit.

In an embodiment, the target data includes the first temperature. The control command includes a first control command and a second control command.

The control command is generated according to the target data and sent to the battery energy distribution unit liquid cooling system or the battery pack liquid cooling system so that the battery energy distribution unit liquid cooling system or the battery pack liquid cooling system starts to operate according to the control command in the manners below.

Whether the first temperature is greater than or equal to a first temperature threshold is determined.

In response to a determination result that the first temperature is greater than or equal to the first temperature threshold, the first control command is generated and sent to the battery energy distribution unit liquid cooling system so that the battery energy distribution unit liquid cooling system starts to operate according to the first control command.

In response to a determination result that the first temperature is less than the first temperature threshold, the second control command is generated and sent to the battery pack liquid cooling system so that the battery pack liquid cooling system starts to operate according to the second control command.

In an embodiment, the target data includes the distribution current. The control command includes a first control command and a second control command.

The control command is generated according to the target data and sent to the battery energy distribution unit liquid cooling system or the battery pack liquid cooling system so that the battery energy distribution unit liquid cooling system or the battery pack liquid cooling system starts to operate according to the control command in the manners below.

Whether the distribution current is greater than or equal to a preset current is determined.

In response to a determination result that the distribution current is greater than or equal to the preset current, the duration since a start of receiving the distribution current is calculated.

Whether the duration is greater than a preset time is determined.

In response to a determination result that the duration is greater than the preset time, the first control command is generated and sent to the battery energy distribution unit liquid cooling system so that the battery energy distribution unit liquid cooling system starts to operate according to the first control command.

In response to a determination result that the duration is less than or equal to the preset time, the second control command is generated and sent to the battery pack liquid cooling system so that the battery pack liquid cooling system starts to operate according to the second control command.

In an embodiment, the battery energy distribution unit liquid cooling system or the battery pack liquid cooling system starts to operate according to the control command in one of the manners below.

In the case where the first control command is generated, the battery energy distribution unit liquid cooling system controls the operation of a water pump according to the first control command.

In the case where the second control command is generated, the battery pack liquid cooling system controls the operation of the water pump according to the second control command.

In an embodiment, after the battery energy distribution unit liquid cooling system controls the operation of the water pump according to the first control command, the method also includes the steps below.

A second temperature of the battery energy distribution unit is acquired.

Whether the battery energy distribution unit satisfies a cooling condition is determined according to the second temperature.

In response to a determination result that the battery energy distribution unit satisfies the cooling condition, the second control command is generated and sent to the battery pack liquid cooling system so that the battery pack liquid cooling system controls the operation of the water pump according to the second control command, thereby controlling the temperature of the battery energy distribution unit.

In response to a determination result that the battery energy distribution unit does not satisfy the cooling condition, whether the battery energy distribution unit liquid cooling system fails to operate is determined according to the second temperature.

In response to a determination result that the battery energy distribution unit liquid cooling system fails to operate, the fault type of the battery energy distribution unit liquid cooling system is determined according to the second temperature, and fault processing is performed on the battery energy distribution unit according to the fault type.

In response to a determination result that the battery energy distribution unit liquid cooling system does not fail to operate, the first control command is generated and sent to the battery energy distribution unit liquid cooling system so that the battery energy distribution unit liquid cooling system controls the operation of the water pump according to the first control command, thereby controlling the temperature of the battery energy distribution unit.

In an embodiment, the cooling condition includes as follows.

The second temperature is less than or equal to a second temperature threshold.

In an embodiment, whether the battery energy distribution unit liquid cooling system fails to operate is determined according to the second temperature in the manners below.

Whether the second temperature is greater than or equal to a third temperature threshold is determined.

In response to a determination result that the second temperature is greater than or equal to the third temperature threshold, it is determined that the battery energy distribution unit liquid cooling system fails to operate.

In response to a determination result that the second temperature is less than the third temperature threshold, it is determined that the battery energy distribution unit liquid cooling system operates normally.

In an embodiment, the fault type of the battery energy distribution unit liquid cooling system includes insufficient cooling and a cooling failure.

The fault type of the battery energy distribution unit liquid cooling system is determined according to the second temperature in the manners below.

Whether the second temperature is less than a fourth temperature threshold is determined.

In response to a determination result that the second temperature is less than the fourth temperature threshold, it is determined that the fault type of the battery energy distribution unit liquid cooling system is insufficient cooling.

In response to a determination result that the second temperature is greater than or equal to the fourth temperature threshold, it is determined that the fault type of the battery energy distribution unit liquid cooling system is the cooling failure.

In an embodiment, in the case where the fault type of the battery energy distribution unit liquid cooling system is insufficient cooling, fault processing is performed on the battery energy distribution unit according to the fault type in the manners below.

A power reduction command is sent to a vehicle controller or a charging pile.

The power of an engine is reduced by the vehicle controller according to the power reduction command, or charging power is reduced by the charging pile according to the power reduction command.

In an embodiment, in the case where the fault type of the battery energy distribution unit liquid cooling system is the cooling failure, fault processing is performed on the battery energy distribution unit according to the fault type in the manners below.

The battery energy distribution unit is controlled to be powered off.

The present application has the beneficial effects below.

The battery energy distribution unit in the embodiments of the application is provided with the battery energy distribution unit liquid cooling system. The temperature control method for a battery energy distribution unit is applied to the battery management system in the battery pack. The battery management system may detect the target data of the battery energy distribution unit. The target data includes at least one of a first temperature or a distribution current. Thus, the battery management system may monitor the first temperature and the distribution current of the battery energy distribution unit in real time to facilitate the subsequent adjustment of the temperature of the battery energy distribution unit. The battery management system generates the control command according to the target data and sends the control command to the battery energy distribution unit liquid cooling system or the battery pack liquid cooling system so that the battery energy distribution unit liquid cooling system or the battery pack liquid cooling system starts to operate according to the control command, thereby controlling the heat exchange speed between the battery energy distribution unit and the battery energy distribution unit liquid cooling system or the heat exchange speed between the battery energy distribution unit and the battery pack liquid cooling system. In this manner, heat dissipation and cooling of the battery energy distribution unit are controlled. It can be seen that this solution can control the temperature of the battery energy distribution unit, so that there is no need to select an electrical component having a large current carrying capacity and a higher specification and type for the battery energy distribution unit. In this manner, the volume, space, weight, and costs of the battery energy distribution unit may not increase.

### BRIEF DESCRIPTION OF DRAWINGS

FIG. 1 is a diagram of the connection relationship between a battery energy distribution unit liquid cooling system and a battery pack liquid cooling system according to an embodiment of the present application.
FIG. 2 is a flowchart of a temperature control method for a battery energy distribution unit according to an embodiment of the present application.
FIG. 3 is a diagram illustrating the connection structure of a battery management system and a battery energy distribution unit according to an embodiment of the present application.
FIG. 4 is a flowchart of another temperature control method for a battery energy distribution unit according to an embodiment of the present application.
FIG. 5 is a flowchart of another temperature control method for a battery energy distribution unit according to an embodiment of the present application.
FIG. 6 is a flowchart of another temperature control method for a battery energy distribution unit according to an embodiment of the present application.
FIG. 7 is a flowchart of a method for determining whether a battery energy distribution unit satisfies a cooling condition by a battery management system according to an embodiment of the present application.
FIG. 8 is a flowchart of a method for determining whether a battery energy distribution unit liquid cooling system fails to operate by a battery management system according to an embodiment of the present application.
FIG. 9 is a flowchart of a method for determining the fault type of a battery energy distribution unit liquid cooling system according to a second temperature by a battery management system according to an embodiment of the present application.
FIG. 10 is a flowchart of another temperature control method for a battery energy distribution unit according to an embodiment of the present application.

### DETAILED DESCRIPTION

The terms "first" and "second" in the description, claims, and above drawings of the present application are used to distinguish between similar objects and are not necessarily used to describe a particular order or sequence. It should be understood that the data used in this way is interchangeable where appropriate so that embodiments of the present application described herein can also be implemented in a sequence not illustrated or described herein. In addition, the terms "including", "having" or any other variations thereof described herein are intended to encompass a non-exclusive inclusion. For example, a process, method, system, product, or device that includes a series of steps or units may include not only the expressly listed steps or units but also other steps or units that are not expressly listed or are inherent to such a process, method, system, product or device.

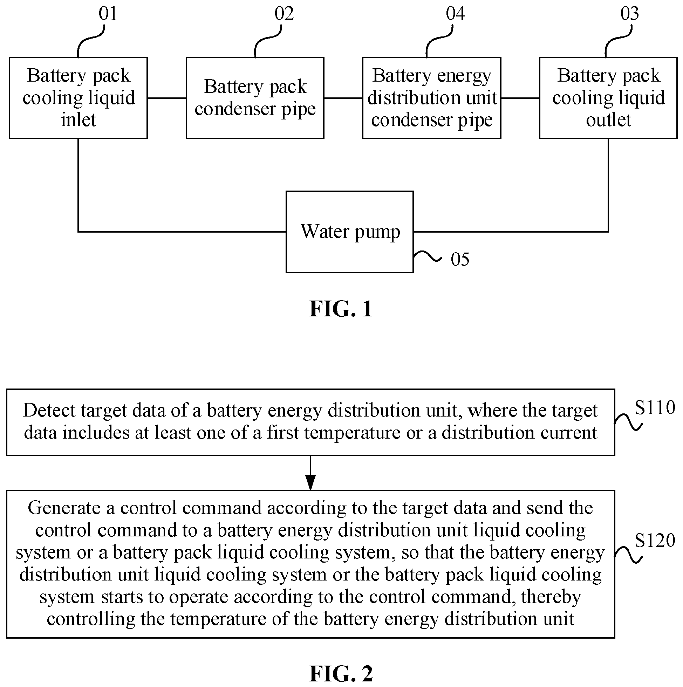

FIG. 1 is a diagram of the connection relationship between a battery energy distribution unit liquid cooling system and a battery pack liquid cooling system according to an embodiment of the present application. A battery energy distribution unit is provided with the battery energy distribution unit liquid cooling system. The battery energy distribution unit liquid cooling system is connected in series with the battery pack liquid cooling system.

The battery pack liquid cooling system is provided with a battery pack cooling liquid inlet 01, a battery pack condenser pipe 02, and a battery pack cooling liquid outlet 03. The battery energy distribution unit liquid cooling system is provided with a battery energy distribution unit condenser pipe 04. The battery pack cooling liquid inlet 01, the battery pack condenser pipe 02, the battery energy distribution unit condenser pipe 04, and the battery pack cooling liquid outlet 03 are connected in series. The battery pack condenser pipe 02 is disposed around a battery pack. The battery energy distribution unit condenser pipe 04 is disposed around the battery energy distribution unit. The battery pack cooling liquid inlet 01 and the battery pack cooling liquid outlet 03 are connected to a water pump 05. The water pump 05 may control cooling liquid to flow circularly in the battery pack condenser pipe 02 and the battery energy distribution unit condenser pipe 04, thereby implementing the heat energy exchange between the cooling liquid and the battery pack and the heat energy exchange between the cooling liquid the battery energy distribution unit.

**Table 1 is the management information of the using operating condition and cell heating operating condition of the battery energy distribution unit according to an embodiment of the present application. The temperature control of the battery energy distribution unit is analyzed according to the service condition and cell heating operating condition of the battery energy distribution unit in table 1. The maximum temperature of the battery energy distribution unit is less than 85°C.**

| Ambient Temperature °C | Cell Temperature °C | Cell Operating Condition | Thermal Management Action | Cooling Liquid Temperature°C | Battery Energy Distribution Unit (BDU) Operating Condition | BDU Initial Temperature°C |
|---|---|---|---|---|---|---|
| (-20, -10) | (-20, 5) | limiting power | heating | 40 | low power | (-20, -10) |
| | (5, 10) | limiting power | heating | 40 | low power | 35 |
| | (10, 15) | allowing high power | heating | 40 | normal power | 15-85 |
| | (15, 30) | allowing high power | circulation | 15 | high power | 30-85 |
| | > 30 | allowing high power | refrigeration | 25 | high power | 85 |
| (-10, 5) | (-10, 5) | limiting power | heating | 40 | low power | (-10, 5) |
| | (5, 10) | limiting power | heating | 40 | low power | |
| | (10, 15) | allowing high power | heating | 40 | normal power | 85 |
| | (15, 30) | allowing high power | circulation | 15 | high power | 85 |
| | > 30 | allowing high power | refrigeration | 25 | high-power charging | 85 |
| (5, 20) | (5, 10) | limiting power | heating | 40 | low power | |
| | (10, 15) | allowing high power | heating | 40 | normal power | 85 |
| | (15, 30) | allowing high power | circulation | 30 | high power | 85 |
| | > 30 | limiting power | refrigeration | 25 | high-power charging | 85 |
| (20, 35) | (20, 25) | allowing high power | circulation | 25 | high power | 25-85 |
| | (25, 30) | allowing high power | circulation | 30 | high power | 30-85 |
| | (30, 35) | allowing high power | refrigeration | 25 | high power | 35-85 |
| | (35, 40) | allowing high power | refrigeration | 25 | high power | 40-85 |
| | (35, 45) | allowing high power | refrigeration | 25 | normal power | 45-85 |
| | (45, 50) | allowing high power | refrigeration | 25 | normal power | 45-85 |

According to the analysis of the previous table, when a cell temperature is -20°C ~ 10°C, a battery pack thermal management system performs a heating function, and the temperature of the cooling liquid is ≤ 40°C. The battery energy distribution unit does not operate at high power due to the influence of a cell capability. The charging and discharging current of the battery pack is low. The heating power of the battery energy distribution unit is low. The maximum temperature of the battery energy distribution unit is within 85°C. There is a temperature difference between the temperature of the battery energy distribution unit and the temperature of the cooling liquid. The heat of the battery energy distribution unit may be transferred into the cooling liquid. The battery energy distribution unit liquid cooling system may not operate, and only the battery pack liquid cooling system controls the cooling liquid to circulate to dissipate heat from the battery energy distribution unit.

When the cell temperature is 10°C ~ 15°C, the battery pack thermal management system continues to perform the heating function, and the temperature of the cooling liquid is ≤ 40°C. The cell allows high-power operation. The distribution current of the battery energy distribution unit increases. There is the case where the temperature of the cooling liquid increases, and the circulation speed of the cooling liquid is low. For this reason, a battery management system needs to acquire the temperature or the distribution current of the battery energy distribution unit. When the maximum temperature of the battery energy distribution unit acquired by the battery management system is ≥ 85°C (85°C is the set threshold of the battery management system), or the distribution current is ≥ 400A (400A is the set threshold of the battery management system), the battery energy distribution unit liquid cooling system needs to control the cooling liquid to circulate at a high speed to accelerate the heat exchange speed between the cooling liquid and the battery energy distribution unit, so that the battery energy distribution unit is cooled until the temperature of the battery energy distribution unit decreases to 70°C (70°C is the set threshold of the battery management system, and the battery energy distribution unit may operate normally under the set threshold). The battery energy distribution unit liquid cooling system stops operating. The battery pack liquid cooling system controls the cooling liquid to circulate to dissipate heat from the battery energy distribution unit.

When the cell temperature is > 30°C, the battery pack thermal management system performs a refrigeration function. When the maximum temperature of the battery energy distribution unit acquired by the battery management system is ≥ 85°C (85°C is the set threshold of the battery management system), or the distribution current is ≥ 400A (400A is the set threshold of the battery management system), the battery energy distribution unit liquid cooling system needs to control the cooling liquid to circulate at a high speed to accelerate the heat exchange speed between the cooling liquid and the battery energy distribution unit, so that the battery energy distribution unit is cooled until the temperature of the battery energy distribution unit decreases to 70°C (70°C is the set threshold of the battery management system, and the battery energy distribution unit may operate normally under the set threshold). The battery energy distribution unit liquid cooling system stops operating. The battery pack liquid cooling system controls the cooling liquid to circulate to dissipate heat from the battery energy distribution unit.

According to the preceding analysis, an embodiment of the present application provide a temperature control method for a battery energy distribution unit to control the temperature of the battery energy distribution unit, so that the battery energy distribution unit does not need to select an electrical component having a large current carrying capacity and a higher specification and type.

FIG. 2 is a flowchart of a temperature control method for a battery energy distribution unit according to an embodiment of the present application. This embodiment is applicable to the temperature control of the battery energy distribution unit having the battery energy distribution unit liquid cooling system. This method may be executed by the battery management system. The battery management system may be performed by hardware and/or software. The method includes the steps below.

In S110, target data of the battery energy distribution unit is detected. The target data includes at least one of a first temperature or a distribution current.

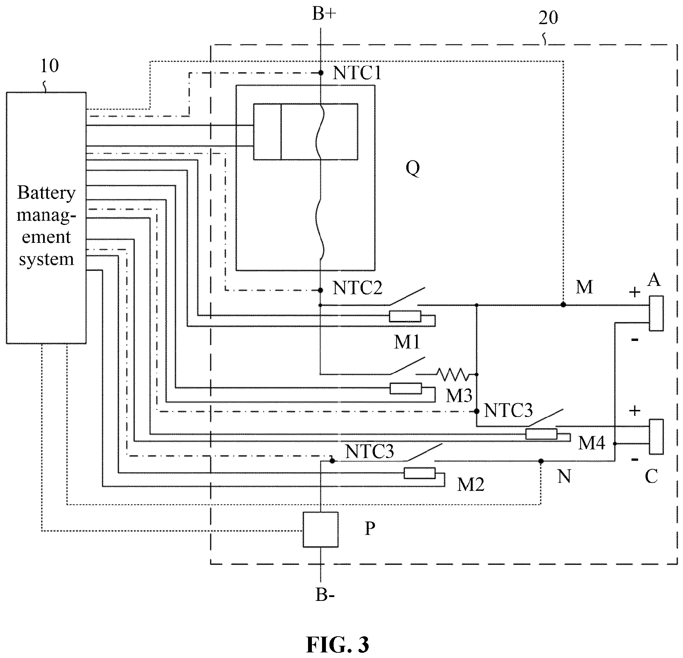

The first temperature refers to a temperature of the battery energy distribution unit. The distribution current refers to a current of the high-voltage circuit of the battery energy distribution unit. For example, FIG. 3 is a diagram illustrating the connection structure of a battery management system and a battery energy distribution unit according to an embodiment of the present application. As shown in FIG. 3, the battery management system 10 and the battery energy distribution unit 20 are connected. The battery energy distribution unit 20 includes a current sensor P and multiple temperature sampling points. The battery management system 10 and the battery energy distribution unit 20 are connected. The battery management system 10 is connected to multiple temperature sampling points (such as temperature sampling point NTC1, temperature sampling point NTC2, temperature sampling point NTC3, and temperature sampling point NTC4) of the high-voltage circuit of the battery energy distribution unit 20, so that the first temperature of the battery energy distribution unit 20 may be detected. A temperature sampling point may be disposed adjacent to active/passive integrated fuse Q, main positive relay M1, main negative relay M2, pre charge relay M3, and fast charge relay M4 to improve the accuracy of the first temperature of the battery energy distribution unit 20 detected by the battery management system 10. The battery management system 10 is also connected to current sensor P. Current sensor P may detect the distribution current of the high-voltage circuit of the battery energy distribution unit 20, monitor the distribution current of the high-voltage circuit in real time, and transmit the distribution current of the high-voltage circuit to the battery management system 10 in real time.

The battery management system 10 obtains the first temperature and the distribution current and may monitor the first temperature and the distribution current of the battery energy distribution unit 20 in real time through the magnitude of the first temperature and the magnitude of the distribution current to facilitate the subsequent control and adjustment of the temperature of the battery energy distribution unit 20.

In S120, a control command is generated according to the target data and sent to the battery energy distribution unit liquid cooling system or the battery pack liquid cooling system so that the battery energy distribution unit liquid cooling system or the battery pack liquid cooling system starts to operate according to the control command, thereby controlling the temperature of the battery energy distribution unit.

The battery management system 10 may directly determine whether the temperature of the battery energy distribution unit 20 affects the normal operation of the battery energy distribution unit 20 through the magnitude of the first temperature and generate the control command based on a determination criterion that whether the temperature of the battery energy distribution unit 20 affects the normal operation of the battery energy distribution unit 20, thereby quickly adjusting the temperature of the battery energy distribution unit 20.

**In** addition, the larger the distribution current of the battery energy distribution unit 20 is, the higher the temperature of the battery energy distribution unit 20 is. When the distribution current reaches a certain level, the temperature of the battery energy distribution unit 20 rapidly increases and exceeds the temperature range of the normal operation of the battery energy distribution unit 20. Thus, the battery management system 10 may indirectly determine whether the temperature of the battery energy distribution unit 20 affects the normal operation of the battery energy distribution unit 20 through the magnitude of the distribution current and generate the control command based on the determination criterion that whether the temperature of the battery energy distribution unit 20 affects the normal operation of the battery energy distribution unit 20, thereby quickly adjusting the temperature of the battery energy distribution unit 20.

When the temperature of the battery energy distribution unit 20 affects the normal operation of the battery energy distribution unit 20, it shows that the temperature of the battery energy distribution unit 20 is too high and needs to be cooled rapidly. The battery energy distribution unit liquid cooling system starts operating according to the control command and may control the cooling liquid to circulate at a high speed to accelerate the heat exchange speed between the cooling liquid and the battery energy distribution unit 20. In this manner, a control of rapid cooling of the battery energy distribution unit 20 is implemented.

When the temperature of the battery energy distribution unit 20 does not affect the normal operation of the battery energy distribution unit 20, the battery energy distribution unit liquid cooling system stops operating. The battery pack liquid cooling system controls the start-up operation according to the control command and may control the cooling liquid to circulate normally. In this manner, a control of normal heat dissipation of the battery energy distribution unit 20 is implemented.

The battery energy distribution unit in the embodiments of the application is provided with the battery energy distribution unit liquid cooling system. The temperature control method for a battery energy distribution unit is applied to the battery management system in the battery pack. The battery management system may detect the target data of the battery energy distribution unit. The target data includes at least one of the first temperature or the distribution current. Thus, the battery management system may monitor the first temperature and the distribution current of the battery energy distribution unit in real time to facilitate the subsequent adjustment of the temperature of the battery energy distribution unit. The battery management system generates the control command according to the target data and sends the control command to the battery energy distribution unit liquid cooling system or the battery pack liquid cooling system so that the battery energy distribution unit liquid cooling system or the battery pack liquid cooling system starts to operate according to the control command, thereby controlling the heat exchange speed between the battery energy distribution unit and the battery energy distribution unit liquid cooling system or the heat exchange speed between the battery energy distribution unit and the battery pack liquid cooling system. In this manner, heat dissipation and cooling of the battery energy distribution unit are controlled. It can be seen that this solution can control the temperature of the battery energy distribution unit, so that the battery energy distribution unit does not need to select an electrical component having a large current carrying capacity and a higher specification and type. In this manner, the volume, space, weight, and costs of the battery energy distribution unit may not increase.

Optionally, the control command includes a first control command and a second control command.

The control command generated by the battery management system 10 includes a first control command and a second control command. When the temperature of the battery energy distribution unit 20 affects the normal operation of the battery energy distribution unit 20, the battery management system 10 generates the first control command to dissipate heat from and cool the battery energy distribution unit 20 at a high speed. When the temperature of the battery energy distribution unit 20 does not affect the normal operation of the battery energy distribution unit 20, the battery management system 10 generates the second control command to dissipate heat from and cool the battery energy distribution unit 20 at a normal speed.

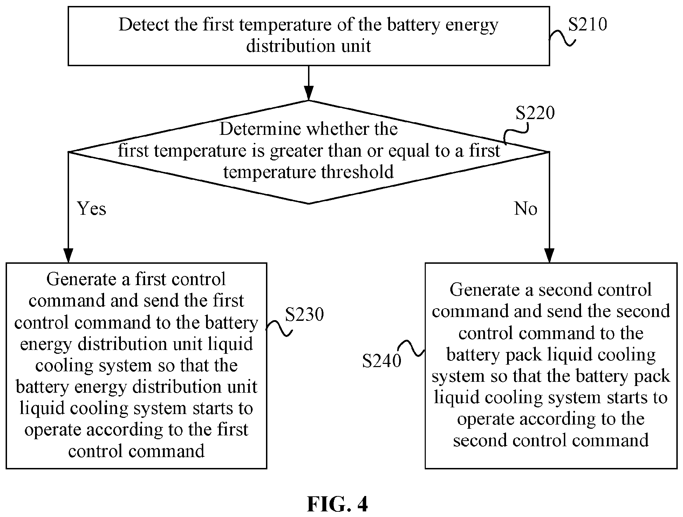

FIG. 4 is a flowchart of another temperature control method for a battery energy distribution unit according to an embodiment of the present application. As shown in FIG. 4, the method includes the steps below.

In S210, the first temperature of the battery energy distribution unit 20 is detected.

In S220, whether the first temperature is greater than or equal to a first temperature threshold is determined. In response to the determination result that the first temperature is greater than or equal to the first temperature threshold, S230 is executed. In response to the determination result that the first temperature is less than the first temperature threshold, S240 is executed.

The first temperature threshold is a preset temperature. The first temperature threshold is the maximum temperature at which the battery energy distribution unit 20 may normally operate.

In S230, the first control command is generated and sent to the battery energy distribution unit liquid cooling system so that the battery energy distribution unit liquid cooling system starts to operate according to the first control command.

In S240, the second control command is generated and sent to the battery pack liquid cooling system so that the battery pack liquid cooling system starts to operate according to the second control command.

In the preceding process, the battery management system 10 may directly generate different control commands through the magnitude of the first temperature, thereby rapidly adjusting the temperature of the battery energy distribution unit 20.

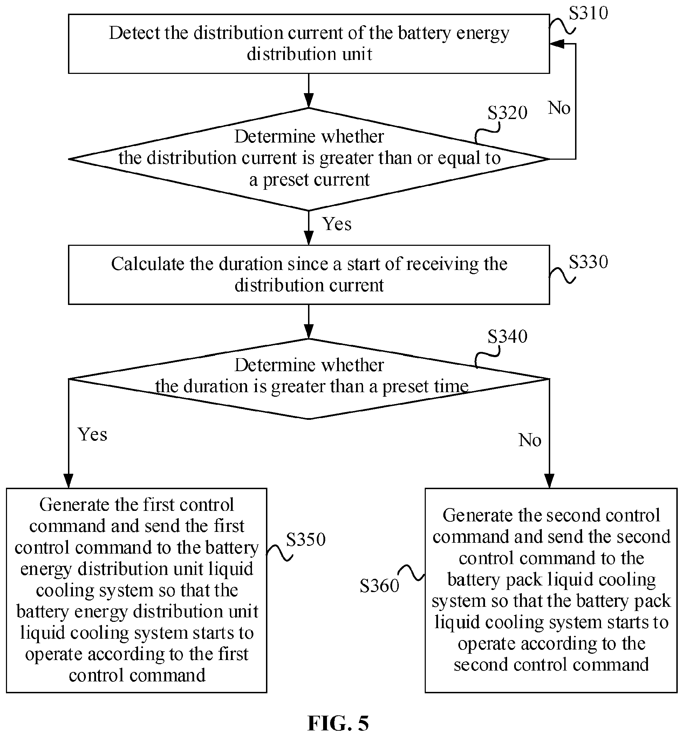

FIG. 5 is a flowchart of another temperature control method for a battery energy distribution unit according to an embodiment of the present application. As shown in FIG. 5, the method includes the steps below.

In S310, the distribution current of the battery energy distribution unit is detected.

In S320, whether the distribution current is greater than or equal to a preset current is determined. In response to the determination result that the distribution current is greater than or equal to the preset current, S330 is executed. In response to the determination result that the distribution current is less than the preset current, S310 is executed.

The preset current is a current that is pre-seted. When the distribution current of the battery energy distribution unit 20 exceeds the preset current, the temperature of the battery energy distribution unit 20 may rapidly increase and exceed the temperature range in which the battery energy distribution unit 20 may normally operate.

In S330, the duration since a start of receiving the distribution current is calculated.

Since the distribution current is unstable, the battery management system 10 needs to calculate the duration since a start of receiving the distribution current to prevent inaccuracy of the received distribution current due to fluctuation of the distribution current.

In S340, whether the duration is greater than a preset time is determined. In response to the determination result that the duration is greater than the preset time, S350 is executed. In response to the determination result that the duration is less than or equal to the preset time, S360 is executed.

In S350, the first control command is generated and sent to the battery energy distribution unit liquid cooling system so that the battery energy distribution unit liquid cooling system starts to operate according to the first control command.

In S360, the second control command is generated and sent to the battery pack liquid cooling system so that the battery pack liquid cooling system starts to operate according to the second control command.

In the preceding process, the battery management system 10 may indirectly generate different control commands through the distribution current, thereby rapidly adjusting the temperature of the battery energy distribution unit 20.

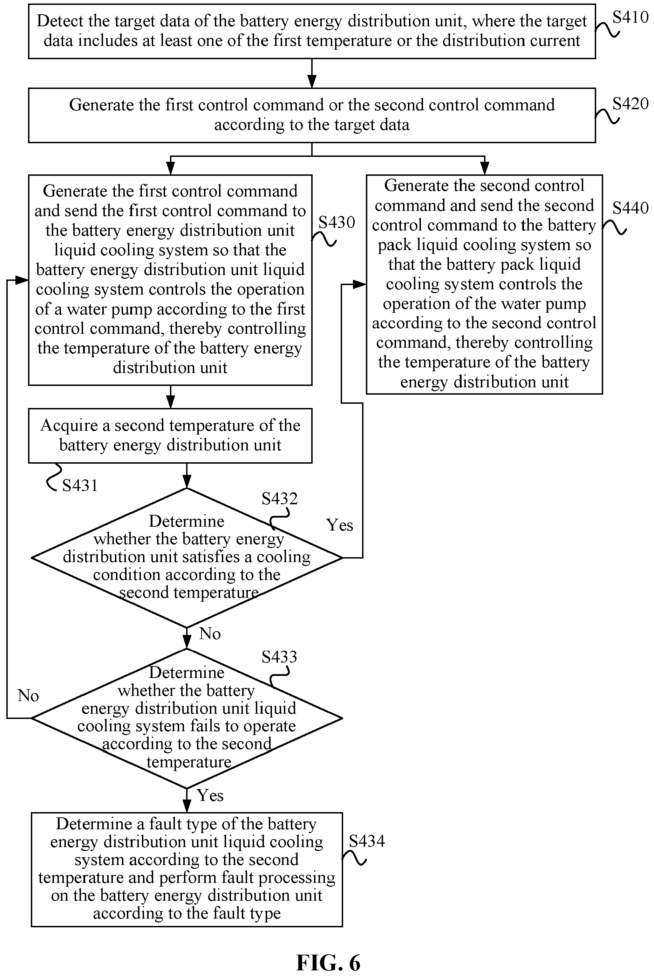

FIG. 6 is a flowchart of another temperature control method for a battery energy distribution unit according to an embodiment of the present application. As shown in FIG. 6, the method includes the steps below.

In S410, the target data of the battery energy distribution unit is detected. The target data includes at least one of the first temperature or the distribution current.

In S420, the first control command or the second control command is generated according to the target data.

In S430, the first control command is generated and sent to the battery energy distribution unit liquid cooling system so that the battery energy distribution unit liquid cooling system controls the operation of a water pump according to the first control command, thereby controlling the temperature of the battery energy distribution unit.

In S431, a second temperature of the battery energy distribution unit is acquired.

The second temperature is the temperature of the battery energy distribution unit 20 detected by the battery management system 10 after the battery energy distribution unit liquid cooling system controls the operation of the water pump according to the first control command.

In S432, whether the battery energy distribution unit satisfies a cooling condition is determined according to the second temperature. In response to the determination result that the battery energy distribution unit satisfies the cooling condition, S440 is executed. In response to the determination result that the battery energy distribution unit does not satisfy the cooling condition, S433 is executed.

If the second temperature is the temperature at which the battery energy distribution unit 20 may operate normally, it indicates that the battery energy distribution unit 20 is successfully cooled, and the battery energy distribution unit 20 satisfies the cooling condition. If the second temperature is the temperature at which the battery energy distribution unit 20 cannot operate normally, it indicates that the cooling of the battery energy distribution unit 20 fails, and the battery energy distribution unit 20 does not satisfy the cooling condition.

In S440, the second control command is generated and sent to the battery pack liquid cooling system so that the battery pack liquid cooling system controls the operation of the water pump according to the second control command, thereby controlling the temperature of the battery energy distribution unit.

In S433, whether the battery energy distribution unit liquid cooling system fails to operate is determined according to the second temperature. In response to the determination result that the battery energy distribution unit liquid cooling system fails to operate, S434 is executed. In response to the determination result that the battery energy distribution unit liquid cooling system does not fail to operate, S430 is executed.

In the case where the cooling of the battery energy distribution unit 20 fails, it is necessary to determine whether the reason for the failure of the cooling of the battery energy distribution unit 20 is that the temperature of the battery energy distribution unit 20 does not lower to a temperature at which the battery energy distribution unit 20 may operate normally, or that the battery energy distribution unit liquid cooling system fails to operate.

In S434, the fault type of the battery energy distribution unit liquid cooling system is determined according to the second temperature, and fault processing is performed on the battery energy distribution unit according to the fault type.

When it is determined that the reason for the failure of the cooling of the battery energy distribution unit 20 is that the battery energy distribution unit liquid cooling system fails to operate, it is necessary to determine the fault type of the battery energy distribution unit liquid cooling system, so that the battery management system 10 performs targeted fault processing according to the fault type of the battery energy distribution unit liquid cooling system subsequently.

For example, the fault type of the battery energy distribution unit liquid cooling system includes insufficient cooling and a cooling failure. When the cooling of the battery energy distribution unit liquid cooling system is insufficient, the temperature of the battery energy distribution unit 20 is in a temperature range, for example, 130°C > the temperature of the battery energy distribution unit 20 ≥ 105°C. When the cooling of the battery energy distribution unit liquid cooling system fails, the temperature of the battery energy distribution unit 20 is also in a temperature range, for example, the temperature of the battery energy distribution unit 20 ≥ 130°C.

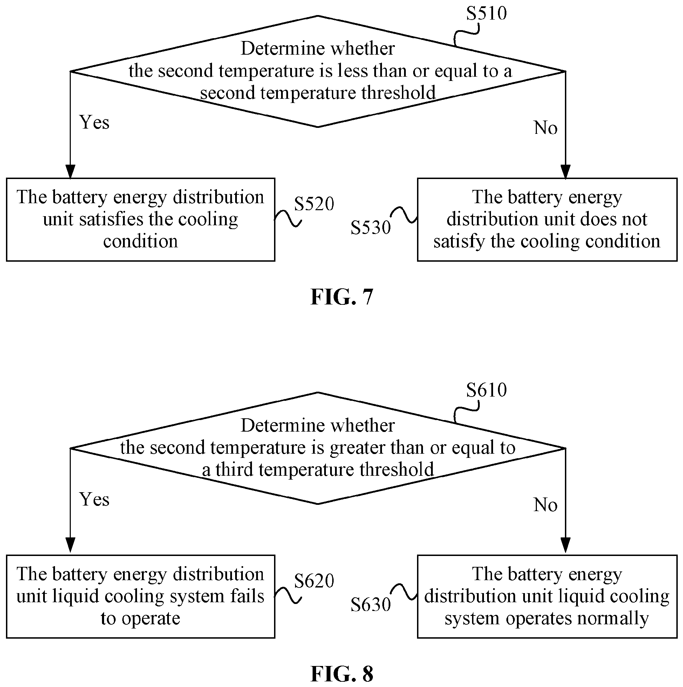

For example, FIG. 7 is a flowchart of a method for determining whether a battery energy distribution unit satisfies a cooling condition by a battery management system according to an embodiment of the present application. On the basis of the preceding embodiment, the battery management system determines whether the battery energy distribution unit satisfies the cooling condition according to the second temperature in the steps below.

In S510, whether the second temperature is greater than or equal to a second temperature threshold is determined. If the second temperature is less than or equal to the second temperature threshold, S520 is executed. If the second temperature is greater than the second temperature threshold, S530 is executed.

The second temperature threshold is the maximum temperature when the battery energy distribution unit can normally operate.

In S520, the battery energy distribution unit satisfies the cooling condition.

In S530, the battery energy distribution unit does not satisfy the cooling condition.

For example, FIG. 8 is a flowchart of a method for determining whether a battery energy distribution unit liquid cooling system fails to operate by a battery management system according to an embodiment of the present application. On the basis of the preceding embodiment, the battery management system determines whether the battery energy distribution unit liquid cooling system fails to operate according to the second temperature in the steps below.

In S610, whether the second temperature is greater than or equal to a third temperature threshold is determined. In response to the determination result that the second temperature is greater than or equal to the third temperature threshold, S620 is executed. In response to the determination result that the second temperature is less than the third temperature threshold, S630 is executed.

The third temperature threshold is the minimum temperature value that can be reached by non-effective cooling of the battery energy distribution unit.

In S620, the battery energy distribution unit liquid cooling system fails to operate.

In S630, the battery energy distribution unit liquid cooling system operates normally.

Optionally, the fault type of the battery energy distribution unit liquid cooling system includes insufficient cooling and a cooling failure.

When the cooling of the battery energy distribution unit liquid cooling system is insufficient, the temperature of the battery energy distribution unit 20 is in a temperature range, for example, 130°C > the temperature of the battery energy distribution unit 20 ≥ 105°C. When the cooling of the battery energy distribution unit liquid cooling system fails, the temperature of the battery energy distribution unit 20 is also in a temperature range, for example, the temperature of the battery energy distribution unit 20 ≥ 130°C.

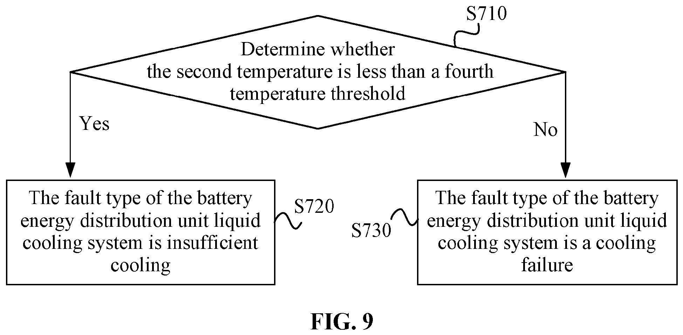

For example, FIG. 9 is a flowchart of a method for determining the fault type of a battery energy distribution unit liquid cooling system according to a second temperature by a battery management system according to an embodiment of the present application. On the basis of the preceding embodiment, the battery management system determines the fault type of the battery energy distribution unit liquid cooling system according to the second temperature in the steps below.

In S710, whether the second temperature is less than a fourth temperature threshold is determined. In response to the determination result that the second temperature is less than the fourth temperature threshold, S720 is executed. In response to the determination result that the second temperature is greater than or equal to the fourth temperature threshold, S730 is executed.

The fourth temperature threshold is the minimum temperature value reached by the battery energy distribution unit 20 when the temperature of the battery energy distribution unit 20 cannot be adjusted by the battery energy distribution unit liquid cooling system.

In S720, the fault type of the battery energy distribution unit liquid cooling system is insufficient cooling.

In S730, the fault type of the battery energy distribution unit liquid cooling system is the cooling failure.

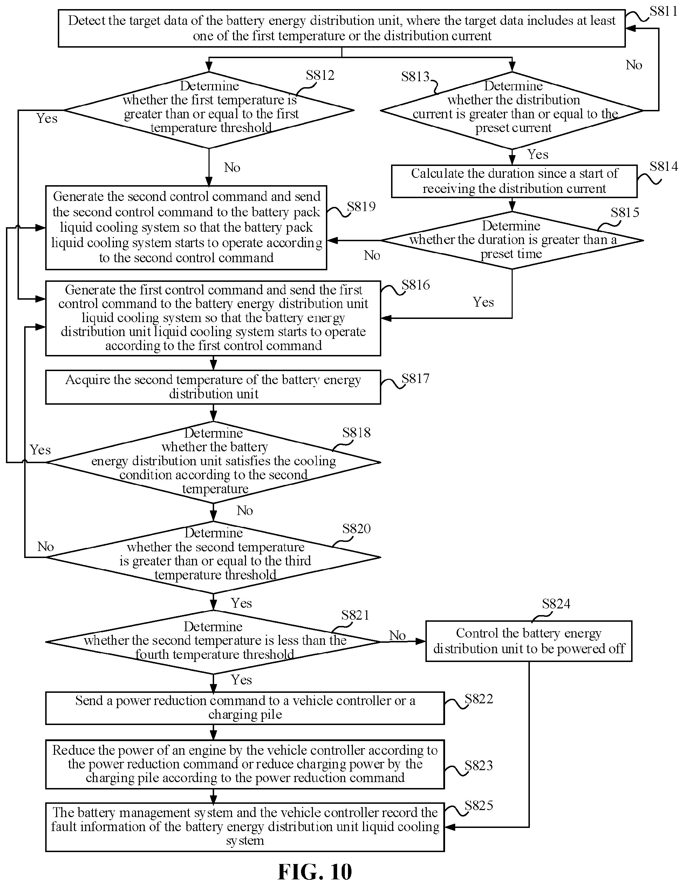

FIG. 10 is a flowchart of another temperature control method for a battery energy distribution unit according to an embodiment of the present application. As shown in FIG. 10, the method includes the steps below.

In S811, the target data of the battery energy distribution unit is detected. The target data includes at least one of the first temperature or the distribution current. S812 and S813 are continued to be executed, or S812 or S813 is continued to be executed.

In S812, whether the first temperature is greater than or equal to the first temperature threshold is determined. In response to the determination result that the first temperature is greater than or equal to the first temperature threshold, S816 is executed. In response to the determination result that the first temperature is less than the first temperature threshold, S819 is executed.

In S813, whether the distribution current is greater than or equal to the preset current is determined. In response to the determination result that the distribution current is greater than or equal to the preset current, S814 is executed. In response to the determination result that the distribution current is less than the preset current, S811 is executed.

In S814, the duration since a start of receiving the distribution current is calculated.

In S815, whether the duration is greater than the preset time is determined. In response to the determination result that the duration is greater than the preset time, S816 is executed. In response to the determination result that the duration is less than or equal to the preset time, S819 is executed.

For example, the duration since a start of receiving the distribution current is calculated, and whether the duration is greater than the preset time is determined. That is, calculating the duration since a start of receiving the distribution current may be calculating the duration of receiving a distribution current greater than or equal to the preset current since a start of receiving the distribution current greater than or equal to the preset current. For example, the preset current is 400A. The duration of the distribution current greater than or equal to 400A since a start of receiving the distribution current greater than or equal to 400A is calculated, and then whether the duration is greater than the preset time is determined.

In S816, the first control command is generated and sent to the battery energy distribution unit liquid cooling system so that the battery energy distribution unit liquid cooling system starts to operate according to the first control command.

In S817, the second temperature of the battery energy distribution unit is acquired.

In S818, whether the battery energy distribution unit satisfies the cooling condition is determined according to the second temperature. In response to the determination result that the battery energy distribution unit satisfies the cooling condition, S819 is executed. In response to the determination result that the battery energy distribution unit does not satisfy the cooling condition, S820 is executed.

In S819, the second control command is generated and sent to the battery pack liquid cooling system so that the battery pack liquid cooling system starts to operate according to the second control command.

In S820, whether the second temperature is greater than or equal to the third temperature threshold is determined. In response to the determination result that the second temperature is greater than or equal to the third temperature threshold, S821 is executed. In response to the determination result that the second temperature is less than the third temperature threshold, S816 is executed.

In S821, whether the second temperature is less than the fourth temperature threshold is determined. In response to the determination result that the second temperature is less than the fourth temperature threshold, S822 is executed. In response to the determination result that the second temperature is greater than or equal to the fourth temperature threshold, S824 is executed.

In S822, a power reduction command is sent to a vehicle controller or a charging pile.

For example, it is assumed that the third temperature threshold is 105°C, and the fourth temperature threshold is 130°C. When the battery management system 10 monitors 130°C > the temperature of the battery energy distribution unit 20 ≥ 105°C, the battery management system 10 sends the power reduction command to the vehicle controller or the charging pile to reduce the power to 80% of the current power. On the basis of 105°C, the current power is reduced by 20% every time the temperature of the battery energy distribution unit 20 rises by 1°C.

In S823, the power of an engine is reduced by the vehicle controller according to the power reduction command, or charging power is reduced by the charging pile according to the power reduction command. S825 is executed.

In S824, the battery energy distribution unit is controlled to be powered off.

For example, with continued reference to FIG. 3, the battery management system 10 and the battery energy distribution unit 20 are connected. The battery energy distribution unit 20 also includes active/passive integrated fuse Q, discharging terminal A, charging terminal C, main positive relay M1, main negative relay M2, precharge relay M3, and fast charge relay M4.

The battery management system 10 and the battery energy distribution unit 20 are connected. The battery management system 10 is connected to active/passive integrated fuse Q, main positive relay M1, main negative relay M2, precharge relay M3, and fast charge relay M4 respectively. The battery management system 10 controls the battery energy distribution unit 20 to be powered off. The battery management system 10 may provide an excitation power signal to active/passive integrated fuse Q so that the built-in gunpowder of active/passive integrated fuse Q is triggered. In this manner, the high-voltage circuit of the battery energy distribution unit 20 is actively exploded, so that the high-voltage circuit of the battery energy distribution unit 20 is disconnected. In addition, after the battery management system 10 controls active/passive integrated fuse Q to disconnect the high-voltage circuit of the battery energy distribution unit 20, the battery management system 10 may send a control signal to main positive relay M1, main negative relay M2, precharge relay M3, and fast charge relay M4 respectively, thereby controlling main positive relay M1, main negative relay M2, precharge relay M3, and fast charge relay M4 to be disconnected.

In S825, the battery management system and the vehicle controller record the fault information of the battery energy distribution unit liquid cooling system.

It is to be understood that various forms of the preceding flows may be used with steps reordered, added, or removed. For example, the steps described in the present application may be executed in parallel, in sequence or in a different order as long as the desired results of the technical solutions provided in the present application are achieved. The execution sequence of these steps is not limited herein.

## Claims

1. A temperature control method for a battery energy distribution unit (20), the method being applied to a battery management system (10) in a battery pack, wherein the battery energy distribution unit (20) is provided with a battery energy distribution unit liquid cooling system, and the battery energy distribution unit liquid cooling system is connected in series with a battery pack liquid cooling system; and
the temperature control method for the battery energy distribution unit (20) comprises:
detecting (S110) target data of the battery energy distribution unit (20), wherein the target data comprises at least one of a first temperature or a distribution current; and
generating (S120) a control command according to the target data and sending the control command to the battery energy distribution unit liquid cooling system or the battery pack liquid cooling system so that the battery energy distribution unit liquid cooling system or the battery pack liquid cooling system starts to operate according to the control command, thereby controlling a temperature of the battery energy distribution unit (20),
**characterized in that**:
the target data comprises the distribution current, and the control command comprises a first control command to dissipate heat from and cool the battery energy distribution unit (20) at high speed and a second control command to dissipate heat from and cool the battery energy distribution unit (20) at normal speed; and
wherein generating (S120) the control command according to the target data and sending the control command to the battery energy distribution unit liquid cooling system or the battery pack liquid cooling system so that the battery energy distribution unit liquid cooling system or the battery pack liquid cooling system starts to operate according to the control command comprises:
determining (S320) whether the distribution current is greater than or equal to a preset current;
in response to a determination result that the distribution current is greater than or equal to the preset current, calculating (S330) duration since a start of receiving the distribution current;
determining (S340) whether the duration is greater than a preset time;
in response to a determination result that the duration is greater than the preset time, generating (S350) the first control command and sending the first control command to the battery energy distribution unit liquid cooling system so that the battery energy distribution unit liquid cooling system starts to operate according to the first control command; and
in response to a determination result that the duration is less than or equal to the preset time, generating (S360) the second control command and sending the second control command to the battery pack liquid cooling system so that the battery pack liquid cooling system starts to operate according to the second control command.

2. The temperature control method for a battery energy distribution unit according to claim 1, wherein the target data further comprises the first temperature, and the control command comprises a first control command and a second control command; and
generating (S120) the control command according to the target data and sending the control command to the battery energy distribution unit liquid cooling system or the battery pack liquid cooling system so that the battery energy distribution unit liquid cooling system or the battery pack liquid cooling system starts to operate according to the control command further comprises:
determining (S220) whether the first temperature is greater than or equal to a first temperature threshold;
in response to a determination result that the first temperature is greater than or equal to the first temperature threshold, generating (S230) the first control command and sending the first control command to the battery energy distribution unit liquid cooling system so that the battery energy distribution unit liquid cooling system starts to operate according to the first control command; and
in response to a determination result that the first temperature is less than the first temperature threshold, generating (S240) the second control command and sending the second control command to the battery pack liquid cooling system so that the battery pack liquid cooling system starts to operate according to the second control command.

3. The temperature control method for a battery energy distribution unit according to claim 2, wherein the battery energy distribution unit liquid cooling system or the battery pack liquid cooling system starts to operate according to the control command in one of the following manners:
in a case where the first control command is generated, the battery energy distribution unit liquid cooling system controls (S430) operation of a water pump (05) according to the first control command; or
in a case where the second control command is generated, the battery pack liquid cooling system controls (S440) the operation of the water pump (05) according to the second control command.

4. The temperature control method for a battery energy distribution unit according to claim 3, after the battery energy distribution unit liquid cooling system controls the operation of the water pump (05) according to the first control command, the temperature control method further comprises:
acquiring (S431) a second temperature of the battery energy distribution unit (20);
determining (S432) whether the battery energy distribution unit (20) satisfies a cooling condition according to the second temperature;
in response to a determination result that the battery energy distribution unit (20) satisfies the cooling condition, generating (S440) the second control command and sending the second control command to the battery pack liquid cooling system so that the battery pack liquid cooling system controls the operation of the water pump (05) according to the second control command, thereby controlling the temperature of the battery energy distribution unit (20);
in response to a determination result that the battery energy distribution unit (20) does not satisfy the cooling condition, determining (S433) whether the battery energy distribution unit liquid cooling system fails to operate according to the second temperature;
in response to a determination result that the battery energy distribution unit liquid cooling system fails to operate, determining (S434) a fault type of the battery energy distribution unit liquid cooling system according to the second temperature and performing fault processing on the battery energy distribution unit (20) according to the fault type; and
in response to a determination result that the battery energy distribution unit liquid cooling system does not fail to operate, generating (S430) the first control command and sending the first control command to the battery energy distribution unit liquid cooling system so that the battery energy distribution unit liquid cooling system controls the operation of the water pump (05) according to the first control command, thereby controlling the temperature of the battery energy distribution unit (20).

5. The temperature control method for a battery energy distribution unit according to claim 4, wherein the cooling condition comprises that
the second temperature is less than or equal to a second temperature threshold.

6. The temperature control method for a battery energy distribution unit according to claim 4, wherein determining whether the battery energy distribution unit liquid cooling system fails to operate according to the second temperature comprises:
determining (S610) whether the second temperature is greater than or equal to a third temperature threshold;
in response to a determination result that the second temperature is greater than or equal to the third temperature threshold, determining (S620) that the battery energy distribution unit liquid cooling system fails to operate; and
in response to a determination result that the second temperature is less than the third temperature threshold, determining (S630) that the battery energy distribution unit liquid cooling system operates normally.

7. The temperature control method for a battery energy distribution unit according to claim 4, wherein the fault type of the battery energy distribution unit liquid cooling system comprises insufficient cooling and a cooling failure; and
determining (S434) the fault type of the battery energy distribution unit liquid cooling system according to the second temperature comprises:
determining (S710) whether the second temperature is less than a fourth temperature threshold;
in response to a determination result that the second temperature is less than the fourth temperature threshold, determining (S720) that the fault type of the battery energy distribution unit liquid cooling system is the insufficient cooling; and
in response to a determination result that the second temperature is greater than or equal to the fourth temperature threshold, determining (S730) that the fault type of the battery energy distribution unit liquid cooling system is the cooling failure.

8. The temperature control method for a battery energy distribution unit according to claim 7, wherein in a case where the fault type of the battery energy distribution unit liquid cooling system is the insufficient cooling, performing the fault processing on the battery energy distribution unit (20) according to the fault type comprises:
sending (S822) a power reduction command to a vehicle controller or a charging pile; and
reducing (S823) power of an engine by the vehicle controller according to the power reduction command or reducing charging power by the charging pile according to the power reduction command.

9. The temperature control method for a battery energy distribution unit according to claim 7, wherein in a case where the fault type of the battery energy distribution unit liquid cooling system is the cooling failure, performing the fault processing on the battery energy distribution unit (20) according to the fault type comprises:
controlling (S824) the battery energy distribution unit (20) to be powered off.

10. A battery management system, the battery management system (10) is performed by hardware or software to execute a temperature control method for a battery energy distribution unit (20), wherein the battery energy distribution unit (20) is provided with a battery energy distribution unit liquid cooling system, and the battery energy distribution unit liquid cooling system is connected in series with a battery pack liquid cooling system; and
the temperature control method for a battery energy distribution unit (20) comprising:
detecting (S110) target data of the battery energy distribution unit (20), wherein the target data comprises at least one of a first temperature or a distribution current; and
generating (S120) a control command according to the target data and sending the control command to the battery energy distribution unit liquid cooling system or the battery pack liquid cooling system so that the battery energy distribution unit liquid cooling system or the battery pack liquid cooling system starts to operate according to the control command, thereby controlling a temperature of the battery energy distribution unit (20),
**characterized in that**:
the target data comprises the distribution current, and the control command comprises a first control command to dissipate heat from and cool the battery energy distribution unit (20) at high speed and a second control command to dissipate heat from and cool the battery energy distribution unit (20) at normal speed; and wherein generating (S120) the control command according to the target data and sending the control command to the battery energy distribution unit liquid cooling system or the battery pack liquid cooling system so that the battery energy distribution unit liquid cooling system or the battery pack liquid cooling system starts to operate according to the control command comprises:
determining (S320) whether the distribution current is greater than or equal to a preset current;
in response to a determination result that the distribution current is greater than or equal to the preset current, calculating (S330) duration since a start of receiving the distribution current;
determining (S340) whether the duration is greater than a preset time;
in response to a determination result that the duration is greater than the preset time, generating (S350) the first control command and sending the first control command to the battery energy distribution unit liquid cooling system so that the battery energy distribution unit liquid cooling system starts to operate according to the first control command; and
in response to a determination result that the duration is less than or equal to the preset time, generating (S360) the second control command and sending the second control command to the battery pack liquid cooling system so that the battery pack liquid cooling system starts to operate according to the second control command.

11. The battery management system according to claim 10, wherein the battery management system (10) is configured to connect to the battery energy distribution unit (20), wherein the battery energy distribution unit (20) comprises multiple temperature sampling points, and the battery management system (10) is configured connect to the multiple temperature sampling points of a high-voltage circuit of the battery energy distribution unit (20) to detect the first temperature of the battery energy distribution unit (20).

12. The battery management system according to claim 10, wherein the battery energy distribution unit (20) comprises a current sensor (P) and battery management system (10) is configured to connect to the current sensor (P), wherein the current sensor (P) is configured to detect the distribution current of a high-voltage circuit of the battery energy distribution unit (20) and monitor the distribution current of the high-voltage circuit in real time, and transmit the distribution current of the high-voltage circuit to the battery management system (10) in real time.

13. The battery management system according to any one of claims 10 to 12, wherein the battery energy distribution unit (20) comprises an active/passive integrated fuse (Q), a main positive relay (M1), a main negative relay (M2), a precharge relay (M3), and a fast charge relay (M4); and the battery management system (10) is connected to the active/passive integrated fuse (Q), the main positive relay (M1), the main negative relay (M2), the precharge relay (M3), and the fast charge relay (M4) respectively, the battery management system (10) is configured to control the battery energy distribution unit (20) to be powered off, wherein the battery management system (10) is configured to provide an excitation power signal to the active/passive integrated fuse (Q) to trigger a built-in gunpowder of the active/passive integrated fuse (Q), so that a high-voltage circuit of the battery energy distribution unit (20) is actively exploded and the high-voltage circuit of the battery energy distribution unit (20) is disconnected.

14. The battery management system according to claim 13, after the battery management system (10) controls the active/passive integrated fuse (Q) to disconnect the high-voltage circuit of the battery energy distribution unit (20), the battery management system (10) is configured to send a control signal to the main positive relay (M1), the main negative relay (M2), the precharge relay (M3) and the fast charge relay (M4) respectively, to control the main positive relay (M1), the main negative relay (M2), the precharge relay (M3) and the fast charge relay (M4) to be disconnected.

## Patentansprüche

1. Temperatursteuerungsverfahren für eine Batterieenergieverteilungseinheit (20), wobei das Verfahren
auf ein Batteriemanagementsystem (10) in einem Batteriepack angewendet wird, wobei die Batterieenergieverteilungseinheit (20) mit einem Flüssigkühlsystem für die Batterieenergieverteilungseinheit versehen ist und das Flüssigkühlsystem für die Batterieenergieverteilungseinheit mit einem Batteriepack- Flüssigkühlsystem in Reihe geschaltet ist; und
das Temperatursteuerungsverfahren für die Batterieenergieverteilungseinheit (20) umfasst:
Erfassen (S110) von Zieldaten der Batterieenergieverteilungseinheit (20), wobei die Zieldaten mindestens eines von einer ersten Temperatur oder einem Verteilungsstrom umfassen; und
Erzeugen (S120) eines Steuerbefehls gemäß den Zieldaten und Senden des Steuerbefehls an das Flüssigkühlsystem für die Batterieenergieverteilungseinheit oder das Batteriepack-Flüssigkühlsystem, so dass das Flüssigkühlsystem für die Batterieenergieverteilungseinheit oder das Batteriepack-Flüssigkühlsystem gemäß dem Steuerbefehl in Betrieb genommen wird, um dadurch eine Temperatur der Batterieenergieverteilungseinheit (20) zu steuern,
**dadurch gekennzeichnet, dass**:
die Zieldaten den Verteilungsstrom umfassen und der Steuerbefehl einen ersten Steuerbefehl zum Wärmeableiten und Kühlen der Batterieenergieverteilungseinheit (20) mit hoher Geschwindigkeit und einen zweiten Steuerbefehl zum Wärmeableiten und Kühlen der Batterieenergieverteilungseinheit (20) mit normaler Geschwindigkeit umfasst; und
wobei das Erzeugen (S120) des Steuerbefehls gemäß den Zieldaten und Senden des Steuerbefehls an das Flüssigkühlsystem für die Batterieenergieverteilungseinheit oder das Batteriepack-Flüssigkühlsystem, so dass das Flüssigkühlsystem für die Batterieenergieverteilungseinheit oder das Batteriepack-Flüssigkühlsystem gemäß dem Steuerbefehl in Betrieb genommen wird, umfasst:
Bestimmen (S320), ob der Verteilungsstrom größer oder gleich einem vorgegebenen Strom ist;
als Reaktion auf ein Bestimmungsergebnis, dass der Verteilungsstrom größer oder gleich dem vorgegebenen Strom ist, Berechnen (S330) einer Zeitdauer seit einem Beginn des Empfangs des Verteilungsstroms;
Bestimmen (S340), ob die Zeitdauer größer als eine vorgegebene Zeit ist;
als Reaktion auf ein Bestimmungsergebnis, dass die Zeitdauer größer als die vorgegebene Zeit ist, Erzeugen (S350) des ersten Steuerbefehls und Senden des ersten Steuerbefehls an das Flüssigkühlsystem für die Batterieenergieverteilungseinheit, so dass das Flüssigkühlsystem für die Batterieenergieverteilungseinheit gemäß dem ersten Steuerbefehl in Betrieb genommen wird; und
als Reaktion auf ein Bestimmungsergebnis, dass die Zeitdauer kleiner oder gleich der vorgegebenen Zeit ist, Erzeugen (S360) des zweiten Steuerbefehls und Senden des zweiten Steuerbefehls an das Batteriepack-Flüssigkühlsystem, so dass das Batteriepack-Flüssigkühlsystem gemäß dem zweiten Steuerbefehl in Betrieb genommen wird.

2. Temperatursteuerungsverfahren für eine Batterieenergieverteilungseinheit nach Anspruch 1, wobei die Zieldaten ferner die erste Temperatur umfassen und der Steuerbefehl einen ersten Steuerbefehl und einen zweiten Steuerbefehl umfasst; und
Erzeugen (S120) des Steuerbefehls gemäß den Zieldaten und Senden des Steuerbefehls an das Flüssigkühlsystem für die Batterieenergieverteilungseinheit oder das Batteriepack-Flüssigkühlsystem, so dass das Flüssigkühlsystem für die Batterieenergieverteilungseinheit oder das Batteriepack-Flüssigkühlsystem gemäß dem Steuerbefehl in Betrieb genommen wird, ferner umfasst:
Bestimmen (S220), ob die erste Temperatur größer oder gleich einem ersten Temperaturschwellenwert ist;
als Reaktion auf ein Bestimmungsergebnis, dass die erste Temperatur größer oder gleich dem ersten Temperaturschwellenwert ist, Erzeugen (S230) des ersten Steuerbefehls und Senden des ersten Steuerbefehls an das Flüssigkühlsystem für die Batterieenergieverteilungseinheit, so dass das Flüssigkühlsystem für die Batterieenergieverteilungseinheit gemäß dem ersten Steuerbefehl in Betrieb genommen wird; und
als Reaktion auf ein Bestimmungsergebnis, dass die erste Temperatur kleiner als der erste Temperaturschwellenwert ist, Erzeugen (S240) des zweiten Steuerbefehls und Senden des zweiten Steuerbefehls an das Batteriepack-Flüssigkühlsystem, so dass das Batteriepack-Flüssigkühlsystem gemäß dem zweiten Steuerbefehl in Betrieb genommen wird.

3. Temperatursteuerungsverfahren für eine Batterieenergieverteilungseinheit nach Anspruch 2, wobei das Flüssigkühlsystem für die Batterieenergieverteilungseinheit oder das Batteriepack-Flüssigkühlsystem gemäß dem Steuerbefehl in einer der folgenden Arten in Betrieb genommen wird:
in einem Fall, in dem der erste Steuerbefehl erzeugt wird, das Flüssigkühlsystem für die Batterieenergieverteilungseinheit Betrieb einer Wasserpumpe (05) gemäß dem ersten Steuerbefehl steuert (S430); oder
in einem Fall, in dem der zweite Steuerbefehl erzeugt wird, das Batteriepack-Flüssigkühlsystem den Betrieb der Wasserpumpe (05) gemäß dem zweiten Steuerbefehl steuert (S440).

4. Temperatursteuerungsverfahren für eine Batterieenergieverteilungseinheit nach Anspruch 3, wobei nach dem Steuern des Betriebs der Wasserpumpe (05) durch das Flüssigkühlsystem für die Batterieenergieverteilungseinheit gemäß dem ersten Steuerbefehl das Temperatursteuerungsverfahren ferner umfasst:
Erfassen (S431) einer zweiten Temperatur der Batterieenergieverteilungseinheit (20);
Bestimmen (S432), ob die Batterieenergieverteilungseinheit (20) eine Kühlbedingung gemäß der zweiten Temperatur erfüllt;
als Reaktion auf ein Bestimmungsergebnis, dass die Batterieenergieverteilungseinheit (20) die Kühlbedingung erfüllt, Erzeugen (S440) des zweiten Steuerbefehls und Senden des zweiten Steuerbefehls an das Batteriepack-Flüssigkühlsystem, so dass das Batteriepack-Flüssigkühlsystem den Betrieb der Wasserpumpe (05) gemäß dem zweiten Steuerbefehl steuert, um dadurch die Temperatur der Batterieenergieverteilungseinheit (20) zu steuern;
als Reaktion auf ein Bestimmungsergebnis, dass die Batterieenergieverteilungseinheit (20) die Kühlbedingung nicht erfüllt, Bestimmen (S433), ob das Flüssigkühlsystem für die Batterieenergieverteilungseinheit gemäß der zweiten Temperatur ausfällt;
als Reaktion auf ein Bestimmungsergebnis, dass das Flüssigkühlsystem für die Batterieenergieverteilungseinheit ausfällt, Bestimmen (S434) eines Fehlertyps des Flüssigkühlsystems für die Batterieenergieverteilungseinheit gemäß der zweiten Temperatur und Durchführen einer Fehlerbehandlung an der Batterieenergieverteilungseinheit (20) gemäß dem Fehlertyp; und
als Reaktion auf ein Bestimmungsergebnis, dass das Flüssigkühlsystem für die Batterieenergieverteilungseinheit nicht ausfällt, Erzeugen (S430) des ersten Steuerbefehls und Senden des ersten Steuerbefehls an das Flüssigkühlsystem für die Batterieenergieverteilungseinheit, so dass das Flüssigkühlsystem für die Batterieenergieverteilungseinheit den Betrieb der Wasserpumpe (05) gemäß dem ersten Steuerbefehl steuert, um dadurch die Temperatur der Batterieenergieverteilungseinheit (20) zu steuern.

5. Temperatursteuerungsverfahren für eine Batterieenergieverteilungseinheit nach Anspruch 4, wobei die Kühlbedingung umfasst, dass
die zweite Temperatur kleiner oder gleich einem zweiten Temperaturschwellenwert ist.

6. Temperatursteuerungsverfahren für eine Batterieenergieverteilungseinheit nach Anspruch 4, wobei Bestimmen, ob das Flüssigkühlsystem für die Batterieenergieverteilungseinheit gemäß der zweiten Temperatur ausfällt, umfasst:
Bestimmen (S610), ob die zweite Temperatur größer oder gleich einem dritten Temperaturschwellenwert ist;
als Reaktion auf ein Bestimmungsergebnis, dass die zweite Temperatur größer oder gleich dem dritten Temperaturschwellenwert ist, Bestimmen (S620), dass das Flüssigkühlsystem für die Batterieenergieverteilungseinheit ausfällt; und
als Reaktion auf ein Bestimmungsergebnis, dass die zweite Temperatur kleiner als der dritte Temperaturschwellenwert ist, Bestimmen (S630), dass das Flüssigkühlsystem für die Batterieenergieverteilungseinheit normal betriebt wird.

7. Temperatursteuerungsverfahren für eine Batterieenergieverteilungseinheit nach Anspruch 4, wobei der Fehlertyp des Flüssigkühlsystems für die Batterieenergieverteilungseinheit unzureichende Kühlung und einen Kühlausfall umfasst; und
das Bestimmen (S434) des Fehlertyps des Flüssigkühlsystems für die Batterieenergieverteilungseinheit gemäß der zweiten Temperatur umfasst:
Bestimmen (S710), ob die zweite Temperatur kleiner als ein vierter Temperaturschwellenwert ist;
als Reaktion auf ein Bestimmungsergebnis, dass die zweite Temperatur kleiner als der vierte Temperaturschwellenwert ist, Bestimmen (S720), dass der Fehlertyp des Flüssigkühlsystems für die Batterieenergieverteilungseinheit die unzureichende Kühlung ist; und
als Reaktion auf ein Bestimmungsergebnis, dass die zweite Temperatur größer oder gleich dem vierten Temperaturschwellenwert ist, Bestimmen (S730), dass der Fehlertyp des Flüssigkühlsystems für die Batterieenergieverteilungseinheit der Kühlausfall ist.

8. Temperatursteuerungsverfahren für eine Batterieenergieverteilungseinheit nach Anspruch 7, wobei in einem Fall, in dem der Fehlertyp des Flüssigkühlsystems für die Batterieenergieverteilungseinheit die unzureichende Kühlung ist, Durchführen der Fehlerbehandlung an der Batterieenergieverteilungseinheit (20) gemäß dem Fehlertyp umfasst:
Senden (S822) eines Leistungsreduzierungsbefehls an eine Fahrzeugsteuerung oder eine Ladesäule; und
Reduzieren (S823) von Leistung eines Motors durch die Fahrzeugsteuerung gemäß dem Leistungsreduzierungsbefehl oder Reduzieren einer Ladeleistung durch die Ladesäule gemäß dem Leistungsreduzierungsbefehl.

9. Temperatursteuerungsverfahren für eine Batterieenergieverteilungseinheit nach Anspruch 7, wobei in einem Fall, in dem der Fehlertyp des Flüssigkühlsystems für die Batterieenergieverteilungseinheit der Kühlausfall ist, Durchführen der Fehlerbehandlung an der Batterieenergieverteilungseinheit (20) gemäß dem Fehlertyp umfasst:
Steuern (S824) der Batterieenergieverteilungseinheit (20) zum Abschalten.

10. Batteriemanagementsystem, wobei das Batteriemanagementsystem (10) durch Hardware oder Software ausgeführt wird, um ein Temperatursteuerungsverfahren für eine Batterieenergieverteilungseinheit (20) auszuführen, wobei die Batterieenergieverteilungseinheit (20) mit einem Flüssigkühlsystem für die Batterieenergieverteilungseinheit versehen ist und das Flüssigkühlsystem für die Batterieenergieverteilungseinheit mit einem Batteriepack-Flüssigkühlsystem in Reihe geschaltet ist; und
das Temperatursteuerungsverfahren für eine Batterieenergieverteilungseinheit (20) umfasst:
Erfassen (S110) von Zieldaten der Batterieenergieverteilungseinheit (20), wobei die Zieldaten mindestens eines von einer ersten Temperatur oder einem Verteilungsstrom umfassen; und
Erzeugen (S120) eines Steuerbefehls gemäß den Zieldaten und Senden des Steuerbefehls an das Flüssigkühlsystem für die Batterieenergieverteilungseinheit oder das Batteriepack-Flüssigkühlsystem, so dass das Flüssigkühlsystem für die Batterieenergieverteilungseinheit oder das Batteriepack-Flüssigkühlsystem gemäß dem Steuerbefehl in Betrieb genommen wird, um dadurch eine Temperatur der Batterieenergieverteilungseinheit (20) zu steuern,
**dadurch gekennzeichnet, dass**:
die Zieldaten den Verteilungsstrom umfassen und der Steuerbefehl einen ersten Steuerbefehl zum Wärmeableiten und Kühlen der Batterieenergieverteilungseinheit (20) mit hoher Geschwindigkeit und einen zweiten Steuerbefehl zum Wärmeableiten und Kühlen der Batterieenergieverteilungseinheit (20) mit normaler Geschwindigkeit umfasst; und
wobei Erzeugen (S120) des Steuerbefehls gemäß den Zieldaten und Senden des Steuerbefehls an das Flüssigkühlsystem für die Batterieenergieverteilungseinheit oder das Batteriepack-Flüssigkühlsystem, so dass das Flüssigkühlsystem für die Batterieenergieverteilungseinheit oder das Batteriepack-Flüssigkühlsystem gemäß dem Steuerbefehl in Betrieb genommen wird, umfasst:
Bestimmen (S320), ob der Verteilungsstrom größer oder gleich einem vorgegebenen Strom ist;
als Reaktion auf ein Bestimmungsergebnis, dass der Verteilungsstrom größer oder gleich dem vorgegebenen Strom ist, Berechnen (S330) einer Zeitdauer seit einem Beginn des Empfangs des Verteilungsstroms;
Bestimmen (S340), ob die Zeitdauer größer als eine vorgegebene Zeit ist;
als Reaktion auf ein Bestimmungsergebnis, dass die Zeitdauer größer als die vorgegebene Zeit ist, Erzeugen (S350) des ersten Steuerbefehls und Senden des ersten Steuerbefehls an das Flüssigkühlsystem für die Batterieenergieverteilungseinheit, so dass das Flüssigkühlsystem für die Batterieenergieverteilungseinheit gemäß dem ersten Steuerbefehl in Betrieb genommen wird; und
als Reaktion auf ein Bestimmungsergebnis, dass die Zeitdauer kleiner oder gleich der vorgegebenen Zeit ist, Erzeugen (S360) des zweiten Steuerbefehls und Senden des zweiten Steuerbefehls an das Batteriepack-Flüssigkühlsystem, so dass das Batteriepack-Flüssigkühlsystem gemäß dem zweiten Steuerbefehl in Betrieb genommen wird.

11. Batteriemanagementsystem nach Anspruch 10, wobei das Batteriemanagementsystem (10) zum Verbinden mit der Batterieenergieverteilungseinheit (20) konfiguriert ist, wobei die Batterieenergieverteilungseinheit (20) mehrere Temperaturabtastpunkte umfasst und das Batteriemanagementsystem (10) zum Verbinden mit den mehreren Temperaturabtastpunkten eines Hochvoltkreises der Batterieenergieverteilungseinheit (20) konfiguriert ist, um die erste Temperatur der Batterieenergieverteilungseinheit (20) zu erfassen.

12. Batteriemanagementsystem nach Anspruch 10, wobei die Batterieenergieverteilungseinheit (20) einen Stromsensor (P) umfasst und das Batteriemanagementsystem (10) zum Verbinden mit dem Stromsensor (P) konfiguriert ist, wobei der Stromsensor (P) konfiguriert ist, um den Verteilungsstrom eines Hochvoltkreises der Batterieenergieverteilungseinheit (20) zu erfassen und den Verteilungsstrom des Hochvoltkreises in Echtzeit zu überwachen und den Verteilungsstrom des Hochvoltkreises in Echtzeit an das Batteriemanagementsystem (10) zu übertragen.

13. Batteriemanagementsystem nach einem der Ansprüche 10 bis 12, wobei die Batterieenergieverteilungseinheit (20) eine aktiv/passiv-integrierte Sicherung (Q), ein Hauptplusrelais (M1), ein Hauptminusrelais (M2), ein Vorladerelais (M3) und ein Schnellladerelais (M4) umfasst; und wobei das Batteriemanagementsystem (10) jeweils mit der aktiv/passiv-integrierten Sicherung (Q), dem Hauptplusrelais (M1), dem Hauptminusrelais (M2), dem Vorladerelais (M3) und dem Schnellladerelais (M4) verbunden ist, und das Batteriemanagementsystem (10) konfiguriert ist, um die Batterieenergieverteilungseinheit (20) abzuschalten, **wobei** das Batteriemanagementsystem (10) konfiguriert ist, der aktiv/passivintegrierten Sicherung (Q) ein Erregungsleistungssignal bereitzustellen, um darin eingebaute Treibladung der aktiv/passiv-integrierten Sicherung (Q) auszulösen, sodass ein Hochspannungskreis der Batterieenergieverteilungseinheit (20) aktiv gesprengt und der Hochspannungskreis der Batterieenergieverteilungseinheit (20) getrennt wird.

14. Batteriemanagementsystem nach Anspruch 13, wobei nachdem das Batteriemanagementsystem (10) die aktiv/passiv integrierte Sicherung (Q) steuert, um den Hochvoltkreis der Batterieenergieverteilungseinheit (20) zu trennen, das Batteriemanagementsystem (10) konfiguriert ist, jeweils ein Steuersignal an das Hauptplusrelais (M1), das Hauptminusrelais (M2), das Vorladerelais (M3) und das Schnellladerelais (M4) zu senden, um das Hauptplusrelais (M1), das Hauptminusrelais (M2), das Vorladerelais (M3) und das Schnellladerelais (M4) zum Trennen zu steuern.

## Revendications

1. Procédé de contrôle de température pour une unité de distribution d'énergie de batterie (20), le procédé étant
appliqué à un système de gestion de batterie (10) dans un bloc de batterie, dans lequel l'unité de distribution d'énergie de batterie (20) est munie d'un système de refroidissement liquide pour unité de distribution d'énergie de batterie, et le système de refroidissement liquide pour unité de distribution d'énergie de batterie est raccordé en série à un système de refroidissement liquide de bloc de batterie ; et
le procédé de contrôle de température pour une unité de distribution d'énergie de batterie (20) comprend :
détecter (S110) des données cibles de l'unité de distribution d'énergie de batterie (20), dans lequel les données cibles comprennent au moins un élément parmi une première température ou un courant de distribution ; et
générer (S120) une commande de contrôle en fonction des données cibles et envoyer la commande de contrôle au système de refroidissement liquide pour unité de distribution d'énergie de batterie ou au système de refroidissement liquide de bloc de batterie de sorte que le système de refroidissement liquide pour unité de distribution d'énergie de batterie ou le système de refroidissement liquide de bloc de batterie commence à fonctionner conformément à la commande de contrôle, contrôlant ainsi la température de l'unité de distribution d'énergie de batterie (20),
**caractérisé en ce que** :
les données cibles comprennent le courant de distribution, et la commande de contrôle comprend une première commande de contrôle pour dissiper la chaleur émanant de et refroidir l'unité de distribution d'énergie de batterie (20) à haute vitesse et une deuxième commande de contrôle pour dissiper la chaleur émanant de et refroidir l'unité de distribution d'énergie de batterie (20) à vitesse normale ; et
dans lequel générer (S120) la commande de contrôle en fonction des données cibles et envoyer la commande de contrôle au système de refroidissement liquide pour unité de distribution d'énergie de batterie ou au système de refroidissement liquide de bloc de batterie de sorte que le système de refroidissement liquide pour unité de distribution d'énergie de batterie ou le système de refroidissement liquide de bloc de batterie commence à fonctionner conformément à la commande de contrôle comprend :
déterminer (S320) si le courant de distribution est supérieur ou égal au courant prédéfini ;
en réponse à un résultat de détermination selon lequel le courant de distribution est supérieur ou égal au courant actuel, calculer (S330) la durée depuis le début de la réception du courant de distribution ;
déterminer (S340) si la durée est supérieure à une durée prédéfinie ;
en réponse à un résultat de détermination selon lequel la durée est supérieure à la durée prédéfinie, générer (S350) la première commande de contrôle et envoyer la première commande de contrôle au système de refroidissement liquide pour unité de distribution d'énergie de batterie_de sorte que le système de refroidissement liquide pour unité de distribution d'énergie de batterie commence à fonctionner conformément à la première commande de contrôle ; et
en réponse à un résultat de détermination selon lequel la durée est inférieure ou égale à la durée prédéfinie, générer (S360) la deuxième commande de contrôle et envoyer la deuxième commande de contrôle au système de refroidissement liquide de bloc de batterie de sorte que le système de refroidissement liquide de bloc de batterie commence à fonctionner conformément à la deuxième commande de contrôle.

2. Procédé de contrôle de température pour une unité de distribution d'énergie de batterie selon la revendication 1, dans lequel les données cibles comprennent en outre la première température, et la commande de contrôle comprend une première commande de contrôle et une deuxième commande de contrôle ; et
générer (S120) la commande de contrôle selon les données cibles et envoyer la commande de contrôle au système de refroidissement liquide pour unité de distribution d'énergie de batterie ou au système de refroidissement liquide de bloc de batterie de sorte que le système de refroidissement liquide pour unité de distribution d'énergie de batterie ou le système de refroidissement liquide de bloc de batterie commence à fonctionner conformément à la commande de contrôle comprend en outre :
déterminer (S220) si la première température est supérieure ou égale à un premier seuil de température ;
en réponse à un résultat de détermination selon lequel la première température est supérieure ou égale au premier seuil de température, générer (S230) la première commande de contrôle et envoyer la première commande de contrôle au système de refroidissement liquide pour unité de distribution d'énergie de batterie de sorte que le système de refroidissement liquide pour unité de distribution d'énergie de batterie commence à fonctionner conformément à la première commande de contrôle ; et
en réponse à un résultat de détermination selon lequel la première température est inférieure au premier seuil de température, générer (S240) la deuxième commande de contrôle et envoyer la deuxième commande de contrôle au système de refroidissement liquide de bloc de batterie de sorte que le système de refroidissement liquide de bloc de batterie commence à fonctionner conformément à la deuxième commande de contrôle.

3. Procédé de contrôle de température pour une unité de distribution d'énergie de batterie selon la revendication 2, dans lequel le système de refroidissement liquide pour unité de distribution d'énergie de batterie ou le système de refroidissement liquide de bloc de batterie commence à fonctionner conformément à la commande de contrôle selon l'une des manières suivantes :
dans le cas où la première commande de contrôle est générée, le système de refroidissement liquide pour unité de distribution d'énergie de batterie commande (S430) le fonctionnement d'une pompe à eau (05) conformément à la première commande de contrôle ; ou
dans le cas où la deuxième commande de contrôle est générée, le système de refroidissement liquide de bloc de batterie commande (S440) le fonctionnement d'une pompe à eau (05) conformément à la deuxième commande de contrôle.

4. Procédé de contrôle de température pour une unité de distribution d'énergie de batterie selon la revendication 3, une fois que le système de refroidissement liquide pour unité de distribution d'énergie de batterie commande le fonctionnement de la pompe à eau (05) conformément à la première commande de contrôle, le procédé de contrôle de température comprend en outre :
acquérir (S431) une deuxième température de l'unité de distribution d'énergie de batterie (20) ;
déterminer (S432) si l'unité de distribution d'énergie de batterie (20) satisfait aux conditions de refroidissement conformément à la deuxième température ;
en réponse à un résultat de détermination selon lequel l'unité de distribution d'énergie de batterie (20) satisfait aux conditions de refroidissement, générer (S440) la deuxième commande de contrôle et envoyer la deuxième commande de contrôle au système de refroidissement liquide de bloc de batterie de sorte que le système de refroidissement liquide de bloc de batterie commande le fonctionnement de la pompe à eau (05) conformément à la deuxième commande de contrôle, contrôlant ainsi la température de l'unité de distribution d'énergie de batterie (20) ;
en réponse à un résultat de détermination selon lequel l'unité de distribution d'énergie de batterie (20) ne satisfait pas aux conditions de refroidissement, déterminer (S433) si le système de refroidissement liquide pour unité de distribution d'énergie de batterie ne fonctionne pas conformément à la deuxième température ;
en réponse à un résultat de détermination selon lequel le système de refroidissement liquide pour unité de distribution d'énergie de batterie est défaillant, déterminer (S434) le type de défaillance du système de refroidissement liquide pour unité de distribution d'énergie de batterie conformément à la deuxième température et entreprendre un traitement de défaillance de l'unité de distribution d'énergie de batterie (20) conformément au type de défaillance ; et
en réponse à un résultat de détermination selon lequel le système de refroidissement liquide pour unité de distribution d'énergie de batterie n'est pas défaillant, générer (S430) la première commande de contrôle et envoyer la première commande de contrôle au système de refroidissement liquide pour unité de distribution d'énergie de batterie_de sorte que le système de refroidissement liquide pour unité de distribution d'énergie de batterie commande le fonctionnement de la pompe à eau (05) conformément à la première commande de contrôle, contrôlant ainsi la température de l'unité de distribution d'énergie de batterie (20).

5. Procédé de contrôle de température pour une unité de distribution d'énergie de batterie selon la revendication 4, dans lequel les conditions de refroidissement comprennent le fait que
la deuxième température est inférieure ou égale à un deuxième seuil de température.

6. Procédé de contrôle de température pour une unité de distribution d'énergie de batterie selon la revendication 4, dans lequel déterminer si le système de refroidissement liquide pour unité de distribution d'énergie de batterie ne fonctionne pas conformément à la deuxième température comprend :
déterminer (S610) si la deuxième température est supérieure ou égale à un troisième seuil de température ;
en réponse à un résultat de détermination selon lequel la deuxième température est supérieure ou égale au troisième seuil de température, déterminer (S620) que le système de refroidissement liquide pour unité de distribution d'énergie de batterie ne fonctionne pas ; et
en réponse à un résultat de détermination selon lequel la deuxième température est inférieure au troisième seuil de deuxième température, déterminer (S630) que le système de refroidissement liquide pour unité de distribution d'énergie de batterie fonctionne normalement.

7. Procédé de contrôle de température pour une unité de distribution d'énergie de batterie selon la revendication 4, dans lequel le type de défaillance du système de refroidissement liquide pour unité de distribution d'énergie de batterie comprend le refroidissement insuffisant et l'échec de refroidissement ; et
déterminer (S434) le type de défaillance du système de refroidissement liquide pour unité de distribution d'énergie de batterie selon la deuxième température comprend :
déterminer (S710) si la deuxième température est inférieure à un quatrième seuil de température ;
en réponse à un résultat de détermination selon lequel la deuxième température est inférieure au quatrième seuil de température, déterminer (S720) que le type de défaillance du système de refroidissement liquide pour unité de distribution d'énergie de batterie est le refroidissement insuffisant ; et
en réponse à un résultat de détermination selon lequel la deuxième température est supérieure ou égale au quatrième seuil de température, déterminer (S730) que le type de défaillance du système de refroidissement liquide pour unité de distribution d'énergie de batterie est l'échec de refroidissement.

8. Procédé de contrôle de température pour une unité de distribution d'énergie de batterie selon la revendication 7, dans lequel dans le cas où le type de défaillance du système de refroidissement liquide pour unité de distribution d'énergie de batterie est le refroidissement insuffisant, entreprendre le traitement de défaillance de l'unité de distribution d'énergie de batterie (20) conformément au type de défaillance comprend :
envoyer (S822) une commande de réduction de puissance à un contrôleur de véhicule ou à une pile de chargement ; et
réduire (S823) la puissance d'un moteur par le contrôleur de véhicule conformément à la commande de réduction de puissance ou réduire la puissance de chargement par la pile de chargement conformément à la commande de réduction de puissance.

9. Procédé de contrôle de température pour une unité de distribution d'énergie de batterie selon la revendication 7, dans lequel dans le cas où le type de défaillance du système de refroidissement liquide pour unité de distribution d'énergie de batterie est l'échec de refroidissement, entreprendre le traitement de défaillance de l'unité de distribution d'énergie de batterie (20) conformément au type de défaillance comprend :
commander (S824) la mise hors tension de l'unité de distribution d'énergie de batterie (20).

10. Système de gestion de batterie, le système de gestion de batterie (10) étant mis en œuvre par équipement matériel ou logiciel afin d'exécuter un procédé de contrôle de température pour une unité de distribution d'énergie de batterie (20), dans lequel l'unité de distribution d'énergie de batterie (20) est munie d'un système de refroidissement liquide pour unité de distribution d'énergie de batterie, et le système de refroidissement liquide pour unité de distribution d'énergie de batterie est raccordé en série à un système de refroidissement liquide de bloc de batterie ; et
le procédé de contrôle de température pour une unité de distribution d'énergie de batterie (20) comprend :
détecter (S110) des données cibles de l'unité de distribution d'énergie de batterie (20), dans lequel les données cibles comprennent au moins un élément parmi une première température ou un courant de distribution ; et
générer (S120) une commande de contrôle en fonction des données cibles et envoyer la commande de contrôle au système de refroidissement liquide pour unité de distribution d'énergie de batterie ou au système de refroidissement liquide de bloc de batterie de sorte que le système de refroidissement liquide pour unité de distribution d'énergie de batterie ou le système de refroidissement liquide de bloc de batterie commence à fonctionner conformément à la commande de contrôle, contrôlant ainsi la température de l'unité de distribution d'énergie de batterie (20),
**caractérisé en ce que** :
les données cibles comprennent le courant de distribution, et la commande de contrôle comprend une première commande de contrôle pour dissiper la chaleur émanant de et refroidir l'unité de distribution d'énergie de batterie (20) à haute vitesse et une deuxième commande de contrôle pour dissiper la chaleur émanant de et refroidir l'unité de distribution d'énergie de batterie (20) à vitesse normale ; et
dans lequel générer (S120) la commande de contrôle en fonction des données cibles et envoyer la commande de contrôle au système de refroidissement liquide pour unité de distribution d'énergie de batterie ou au système de refroidissement liquide de bloc de batterie de sorte que le système de refroidissement liquide pour unité de distribution d'énergie de batterie ou le système de refroidissement liquide de bloc de batterie commence à fonctionner conformément à la commande de contrôle comprend :
déterminer (S320) si le courant de distribution est supérieur ou égal au courant actuel ;
en réponse à un résultat de détermination selon lequel le courant de distribution est supérieur ou égal au courant actuel, calculer (S330) la durée depuis le début de la réception du courant de distribution ;
déterminer (S340) si la durée est supérieure à une durée prédéfinie ;
en réponse à un résultat de détermination selon lequel la durée est supérieure à la durée prédéfinie, générer (S350) la première commande de contrôle et envoyer la première commande de contrôle au système de refroidissement liquide pour unité de distribution d'énergie de batterie_de sorte que le système de refroidissement liquide pour unité de distribution d'énergie de batterie commence à fonctionner conformément à la première commande de contrôle ; et
en réponse à un résultat de détermination selon lequel la durée est inférieure ou égale à la durée prédéfinie, générer (S360) la deuxième commande de contrôle et envoyer la deuxième commande de contrôle au système de refroidissement liquide de bloc de batterie de sorte que le système de refroidissement liquide de bloc de batterie commence à fonctionner conformément à la deuxième commande de contrôle.

11. Système de gestion de batterie selon la revendication 10, dans lequel le système de gestion de batterie (10) est configuré pour être raccordé à l'unité de distribution d'énergie de batterie (20), dans lequel l'unité de distribution d'énergie de batterie (20) comprend des points multiples d'échantillonnage de température, et le système de gestion de batterie (10) est configuré pour raccorder les points multiples d'échantillonnage de température d'un circuit haute tension de l'unité de distribution d'énergie de batterie (20) pour détecter la première température de l'unité de distribution d'énergie de batterie (20).

12. Système de gestion de batterie selon la revendication 10, dans lequel l'unité de distribution d'énergie de batterie (20) comprend un capteur de courant (P) et le système de gestion de batterie (10) est configuré pour être raccordé au capteur de courant (P), dans lequel le capteur de courant (P) est configuré pour détecter le courant de distribution d'un circuit haute tension de l'unité de distribution d'énergie de batterie (20) et surveiller le courant de distribution du circuit haute tension en temps réel, et transmettre le courant de distribution du circuit haute tension au système de gestion de batterie (10) en temps réel.

13. Système de gestion de batterie selon l'une quelconque des revendications 10 à 12, dans lequel l'unité de distribution d'énergie de batterie (20) comprend un fusible intégré actif/passif (Q), un relais positif principal (M1), un relais négatif principal (M2), un relais de précharge (M3), et un relais de charge rapide (M4) ; et le système de gestion de batterie (10) est raccordé au fusible intégré actif/passif (Q), au relais positif principal (M1), au relais négatif principal (M2), au relais de précharge (M3), et au relais de charge rapide (M4) respectivement, le système de gestion de batterie (10) est configuré pour contrôler la mise hors tension de l'unité de distribution d'énergie de batterie (20), dans lequel le système de gestion de batterie (10) est configuré pour fournir un signal de puissance d'excitation au fusible intégré actif/passif (Q) pour déclencher une poudre intégrée au fusible intégré actif/passif (Q), de sorte que le circuit haute tension de l'unité de distribution d'énergie de batterie (20) soit activement explosé et que le circuit haute tension de l'unité de distribution d'énergie de batterie (20) soit déconnecté.

14. Système de gestion de batterie selon la revendication 13, une fois que le système de gestion de batterie (10) commande au fusible intégré actif/passif (Q) de se déconnecter du circuit haute tension de l'unité de distribution d'énergie de batterie (20), le système de gestion de batterie (10) est configuré pour envoyer un signal de commande au relais positif principal (M1), au relais négatif principal (M2), au relais de précharge (M3) et au relais de charge rapide (M4) respectivement, pour commander la déconnexion du relais positif principal (M1), du relais négatif principal (M2), du relais de précharge (M3) et du relais de charge rapide (M4).
